# EUROPEAN PATENT APPLICATION

(11) **EP 4 844 579 A1**
(43) Date of publication of application: **25.11.2026**
(21) Application number: 25741695.8
(22) Date of filing: 02.01.2025
(51) Int. Cl.: G06F 9/455, G06F 12/1009

(54) **PAGE MARKING METHOD, APPARATUS AND DEVICE**

(30) Priority: 17.01.2024 CN 202410071868
(71) Applicant: Cloud Intelligence Assets Holding (Singapore) Private Limited, Singapore 189554 (SG)
(72) Inventor: ZHANG, Bikuan, Hangzhou, Zhejiang 310030 (CN)
(74) Representative: Barker Brettell LLP
(86) International application number: PCT/IB2025/050022
(87) International publication number: WO 2025/153900

(57) **Abstract**

The present disclosure provides a page marking method, an apparatus, and a device. The method may include: receiving a memory operation request corresponding to a virtual machine during live migration of the virtual machine, where the memory operation request is used to request an operation on a target memory page; performing the operation on data of the target memory page according to the memory operation request; and updating a page flag of the target memory page to a dirty flag in a first storage space corresponding to the virtual machine, where the dirty flag is used to indicate that the data of the target memory page is updated. Migration efficiency of the data of the target memory page is improved.

## Description

This application claims priority to Chinese Patent Application No. 202410071868.4, filed on January 17, 2024 and entitled "PAGE MARKING METHOD, APPARATUS, AND DEVICE," the entire content of which is incorporated herein by reference.

### TECHNICAL FIELD

The present disclosure relates to the field of computer technology, and in particular, to a page marking method, an apparatus, and a device.

### BACKGROUND

A virtual machine may be run on a source host machine. Memory of the source host machine may include a plurality of memory pages corresponding to the virtual machine. Data corresponding to the virtual machine may be stored in the plurality of memory pages. When the virtual machine is live-migrated from the source host machine to a target host machine, the plurality of memory pages corresponding to the virtual machine need to be determined in the source host machine, and the data of the plurality of memory pages needs to be migrated to the target host machine.

In the related art, during live migration of the virtual machine, the virtual machine is still running and may update data of the memory pages, resulting in target memory pages whose data has been updated. The virtual machine has corresponding record tables, and the record tables include base addresses and page flags of the plurality of memory pages corresponding to the virtual machine. In the record tables corresponding to the virtual machine, page flags corresponding to the target memory pages may be updated to dirty flags to indicate that the target memory pages have been updated and data of the target memory pages needs to be migrated. However, based on the above approach, during iterative migration of the data of the plurality of memory pages, because there are a large number of record tables corresponding to the virtual machine, and all entries in each record table need to be traversed to determine the page flag of each memory page so as to determine the plurality of target memory pages, the migration efficiency of the data of the target memory pages is low.

### SUMMARY

Various aspects of the present disclosure provide a page marking method, an apparatus, and a device, so as to improve migration efficiency of data of a target memory page.

In a first aspect, an embodiment of the present disclosure provides a page marking method, including:
receiving, during live migration of a virtual machine, a memory operation request corresponding to the virtual machine, where the memory operation request is used to request an operation on a target memory page;
performing the operation on data of the target memory page according to the memory operation request;
updating, in a first storage space corresponding to the virtual machine, a page flag of the target memory page to a dirty flag, where the dirty flag is used to indicate that the data of the target memory page is updated.

In a possible implementation, updating, in the first storage space corresponding to the virtual machine, the page flag of the target memory page to the dirty flag includes:
determining a first storage address according to the memory operation request;
determining the first storage space according to the first storage address;
updating the page flag of the target memory page to the dirty flag in the first storage space.

In a possible implementation, the memory operation request includes a device identifier, and determining the first storage address according to the memory operation request includes:
determining a context entry corresponding to the virtual machine according to the device identifier;
obtaining the first storage address from the context entry, where the first storage address is pre-stored in the context entry.

In a possible implementation, a page flag bitmap corresponding to the virtual machine is stored in the first storage space, and updating the page flag of the target memory page to the dirty flag in the first storage space includes:
determining a current page flag corresponding to the target memory page in the page flag bitmap in the first storage space;
if the current page flag is different from the dirty flag, updating the current page flag to the dirty flag.

In a possible implementation, the memory operation request includes a virtual address of the target memory page, and the virtual address includes a first portion of the virtual address and a second portion of the virtual address; and performing the operation on the data of the target memory page according to the memory operation request includes:
querying a record table for record information corresponding to the target memory page according to the first portion of the virtual address, where the record information includes a base address of the target memory page;
determining a physical address corresponding to the target memory page according to the base address and the second portion of the virtual address;
performing the operation on the data of the target memory page according to the physical address.

In a possible implementation, the record information further includes a page flag of the target memory page, and the method further includes:
determining, in the record information, whether the page flag of the target memory page is the dirty flag;
if not, updating the page flag of the target memory page to the dirty flag.

In a possible implementation, the method further includes:
determining at least one dirty memory page among a plurality of memory pages corresponding to the virtual machine according to page flags of the plurality of memory pages corresponding to the virtual machine in the first storage space;
synchronizing data of the at least one dirty memory page from a source host machine where the virtual machine currently resides to a target host machine, where the target host machine is a host machine to which the virtual machine is to be migrated.

In a possible implementation, the page flag bitmap corresponding to the virtual machine is stored in the first storage space, and determining the at least one dirty memory page among the plurality of memory pages corresponding to the virtual machine according to the page flags of the plurality of memory pages corresponding to the virtual machine in the first storage space includes:
determining at least one target page flag in the page flag bitmap, where a value of the target page flag is a value corresponding to the dirty flag;
determining a memory page corresponding to the at least one target page flag as the at least one dirty memory page.

In a possible implementation, the method further includes:
allocating a second storage space in the source host machine;
determining a second storage address of the second storage space;
updating the first storage address to the second storage address in a context entry corresponding to the virtual machine.

In a second aspect, an embodiment of the present disclosure provides a page marking apparatus, including: a receiving module, an operation module, and a first update module, where:
the receiving module is configured to receive, during live migration of a virtual machine, a memory operation request corresponding to the virtual machine, where the memory operation request is used to request an operation on a target memory page;
the operation module is configured to perform the operation on data of the target memory page according to the memory operation request;
the first update module is configured to update, in a first storage space corresponding to the virtual machine, a page flag of the target memory page to a dirty flag, where the dirty flag is used to indicate that the data of the target memory page is updated during the live migration of the virtual machine.

In a possible implementation, the first update module is specifically configured to:
determine a first storage address according to the memory operation request;
determine the first storage space according to the first storage address;
update the page flag of the target memory page to the dirty flag in the first storage space.

In a possible implementation, the memory operation request includes a device identifier, and the first update module is specifically configured to:
determine a context entry corresponding to the virtual machine according to the device identifier;
obtain the first storage address from the context entry, where the first storage address is pre-stored in the context entry.

In a possible implementation, a page flag bitmap corresponding to the virtual machine is stored in the first storage space, and the first update module is specifically configured to:
determine a current page flag corresponding to the target memory page in the page flag bitmap in the first storage space;
if the current page flag is different from the dirty flag, update the current page flag to the dirty flag.

In a possible implementation, the memory operation request includes a virtual address of the target memory page, and the virtual address includes a first portion of the virtual address and a second portion of the virtual address; and the operation module is specifically configured to:
query a record table for record information corresponding to the target memory page according to the first portion of the virtual address, where the record information includes a base address of the target memory page;
determine a physical address corresponding to the target memory page according to the base address and the second portion of the virtual address;
perform the operation on the data of the target memory page according to the physical address.

In a possible implementation, the record information further includes a page flag of the target memory page, and the first update module is further configured to:
determine, in the record information, whether the page flag of the target memory page is the dirty flag;
if not, update the page flag of the target memory page to the dirty flag.

In a possible implementation, the apparatus further includes: a first determination module and a synchronization module, where:
the first determination module is configured to determine at least one dirty memory page among a plurality of memory pages corresponding to the virtual machine according to page flags of the plurality of memory pages corresponding to the virtual machine in the first storage space;
the synchronization module is configured to synchronize data of the at least one dirty memory page from a source host machine where the virtual machine currently resides to a target host machine, where the target host machine is a host machine to which the virtual machine is to be migrated.

In a possible implementation, a page flag bitmap corresponding to the virtual machine is stored in the first storage space, and the first determination module is specifically configured to:
determine at least one target page flag in the page flag bitmap, where a value of the target page flag is a value corresponding to the dirty flag;
determine a memory page corresponding to the at least one target page flag as the at least one dirty memory page.

In a possible implementation, the apparatus further includes an allocation module, a second determination module, and a second update module, where:
the allocation module is configured to allocate a second storage space in the source host machine;
the second determination module is configured to determine a second storage address of the second storage space;
the second update module is configured to update the first storage address to the second storage address in a context entry corresponding to the virtual machine.

In a third aspect, an embodiment of the present disclosure provides an electronic device, including: a memory and a processor;
the memory stores computer-executable instructions;
the processor executes the computer-executable instructions stored in the memory, such that the processor is caused to perform the method according to any one of the first aspect.

In a fourth aspect, an embodiment of the present disclosure provides a computer-readable storage medium, where computer-executable instructions are stored in the computer-readable storage medium, and when the computer-executable instructions are executed by a processor, the computer-executable instructions are used to implement the method according to any one of the first aspect.

In a fifth aspect, an embodiment of the present disclosure provides a computer program product, including a computer program, where when the computer program is executed by a processor, the method according to any one of the first aspect is implemented.

Embodiments of the present disclosure provide a page marking method, an apparatus, and a device. During live migration of a virtual machine, a source host machine may receive a memory operation request corresponding to the virtual machine, perform an operation on data of a target memory page according to the memory operation request, and further update, in a first storage space corresponding to the virtual machine, a page flag of the target memory page to a dirty flag. Because the page flag of the target memory page can be updated to the dirty flag in the first storage space corresponding to the virtual machine, during the process of migrating the virtual machine from the source host machine to a target host machine, when iterative migration is performed, the page flags of the respective memory pages can be obtained from the first storage space to determine a plurality of target memory pages that need to be migrated, without the need to traverse all entries in the record tables corresponding to the virtual machine, thereby improving the migration efficiency of the data of the target memory pages.

### BRIEF DESCRIPTION OF THE DRAWINGS

The accompanying drawings described herein are used to provide a further understanding of the present disclosure and constitute a part of the present disclosure. The exemplary embodiments of the present disclosure and the descriptions thereof are used to explain the present disclosure and do not constitute an improper limitation of the present disclosure. In the drawings:
FIG. 1 is a schematic diagram of a scenario provided by an exemplary embodiment of the present disclosure;
FIG. 2 is a page marking method in the related art provided by the present disclosure;
FIG. 3 is a schematic flowchart of a page marking method provided by an exemplary embodiment of the present disclosure;
FIG. 4 is a schematic diagram of memory in a source host machine provided by an exemplary embodiment of the present disclosure;
FIG. 5 is a schematic flowchart of another page marking method provided by an exemplary embodiment of the present disclosure;
FIG. 6 is a schematic structural diagram of a page marking method provided by an exemplary embodiment of the present disclosure;
FIG. 7 is a schematic diagram of a page flag bitmap provided by an exemplary embodiment of the present disclosure;
FIG. 8 is a schematic flowchart of iterative migration of a plurality of memory pages corresponding to a virtual machine provided by an exemplary embodiment of the present disclosure;
FIG. 9 is a schematic structural diagram of a page marking apparatus provided by an exemplary embodiment of the present disclosure;
FIG. 10 is a schematic structural diagram of another page marking apparatus provided by an exemplary embodiment of the present disclosure;
FIG. 11 is a schematic structural diagram of yet another page marking apparatus provided by an exemplary embodiment of the present disclosure;
FIG. 12 is a schematic structural diagram of an electronic device provided by an exemplary embodiment of the present disclosure.

### DETAILED DESCRIPTION

It should be noted that the user information (including but not limited to user device information, user personal information, etc.) and data (including but not limited to data for analysis, stored data, displayed data, etc.) involved in the present disclosure are all information and data authorized by the user or fully authorized by all parties, and the collection, use, and processing of the relevant data are required to comply with relevant laws, regulations, and standards, and corresponding operation interfaces are provided for the user to choose to authorize or refuse.

To make the objectives, technical solutions, and advantages of the present disclosure clearer, the technical solutions of the present disclosure are clearly and completely described below with reference to specific embodiments of the present disclosure and corresponding drawings. Obviously, the described embodiments are merely some embodiments of the present disclosure, rather than all of the embodiments. Based on the embodiments of the present disclosure, all other embodiments obtained by a person of ordinary skill in the art without creative effort fall within the scope of protection of the present disclosure.

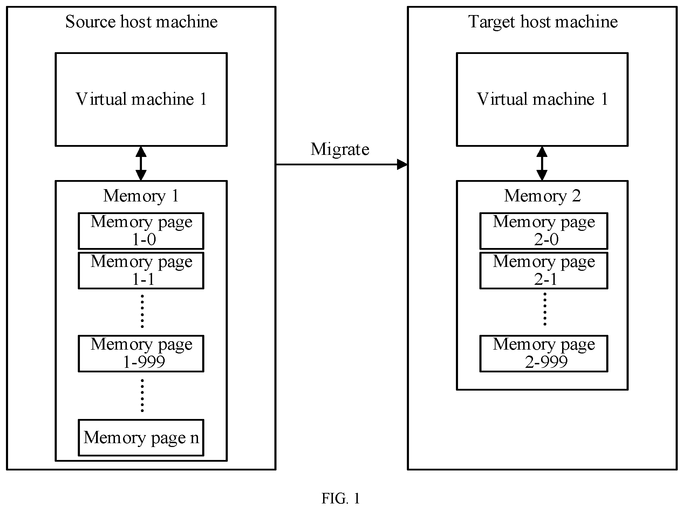

FIG. 1 is a schematic diagram of a scenario according to an exemplary embodiment of the present disclosure. Referring to FIG. 1, the scenario includes a source host machine and a target host machine.

Memory 1 in the source host machine may include n memory pages. The n memory pages may be used to store data. For example, the n memory pages may respectively be memory page 0, memory page 1, ..., memory page n, where n is an integer greater than or equal to 1.

Virtual machine 1 may be run in the source host machine, and a plurality of memory pages corresponding to the virtual machine 1 exist among the n memory pages. Assuming that 1000 memory pages corresponding to the virtual machine 1 exist among the n memory pages, the 1000 memory pages store data corresponding to the virtual machine 1. For example, the 1000 memory pages may respectively be memory page 1-0, memory page 1-1, ..., memory page 1-999.

When the virtual machine 1 is migrated from the source host machine to the target host machine, the 1000 memory pages corresponding to the virtual machine 1 need to be determined in the source host machine, and the data of the 1000 memory pages need to be migrated to memory pages in the target host machine. For example, the data of memory page 1-0, memory page 1-1, ..., memory page 1-999 may respectively be migrated to memory page 2-0, memory page 2-1, ..., memory page 2-999 in the target host machine.

After the migration is completed, the virtual machine 1 may be run in the target host machine, and memory 2 of the target host machine may include the 1000 memory pages corresponding to the virtual machine 1, where the 1000 memory pages store the data corresponding to the virtual machine 1.

In the related art, during live migration of a virtual machine, the virtual machine is still running and may update data of memory pages, resulting in target memory pages whose data has been updated. The virtual machine has corresponding record tables, and the record tables include base addresses and page flags of a plurality of memory pages corresponding to the virtual machine. In the record tables corresponding to the virtual machine, page flags corresponding to the target memory pages may be updated to dirty flags to indicate that the target memory pages have been updated and data of the target memory pages needs to be migrated. However, based on the above approach, during iterative migration of data of the plurality of memory pages, because there are a large number of record tables corresponding to the virtual machine, and all entries in each record table need to be traversed to determine the page flag of each memory page so as to determine the plurality of target memory pages, the migration efficiency of the data of the target memory pages is low.

In an embodiment of the present disclosure, a first storage space corresponding to a virtual machine may be provided in memory of a source host machine. When an operation is performed on data of a target memory page, a page flag of the target memory page may be updated to a dirty flag in the first storage space to indicate that the target memory page is a memory page that has been updated and the data of the target memory page needs to be migrated. Based on the above approach, during the process of migrating the virtual machine from the source host machine to a target host machine, when iterative migration is performed, page flags of respective memory pages can be obtained in the first storage space to determine a plurality of target memory pages that need to be migrated, without the need to traverse all entries in record tables corresponding to the virtual machine, thereby improving the migration efficiency of the data of the target memory pages.

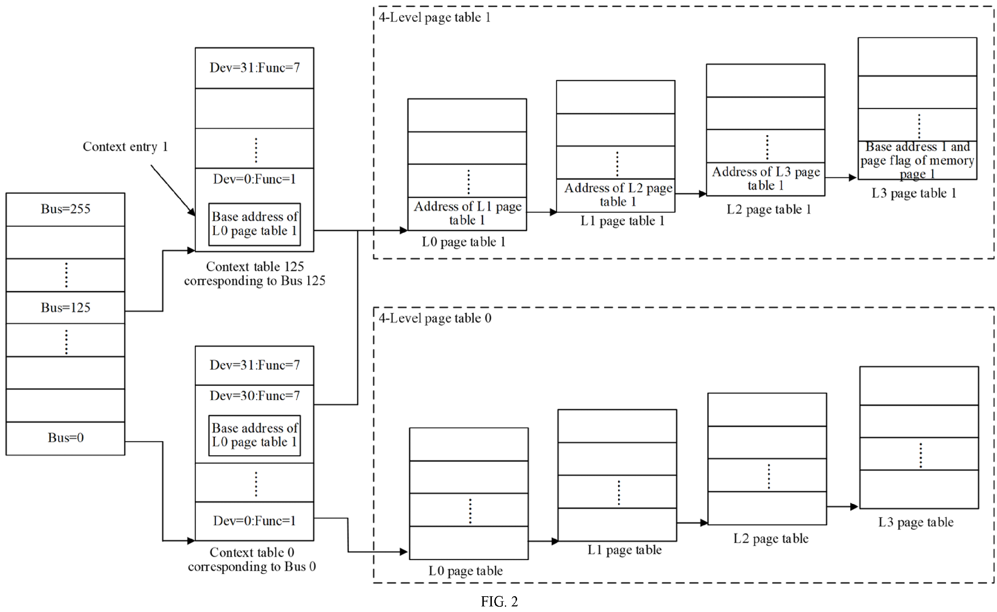

A page marking method in the related art is described below with reference to FIG. 2. The page marking method is based on an input/output memory management unit (Input/Output Memory Management Unit, IOMMU).

FIG. 2 illustrates a page marking method in the related art provided by the present disclosure. Referring to FIG. 2, a source host machine includes one root table (root table), a plurality of context tables (context tables), and a plurality of 4-level page tables (Page Tables).

The root table may include a plurality of entries, each entry corresponding to a bus number (Bus). For example, the root table may include 256 entries, where entry 1 corresponds to Bus0, ..., entry 125 corresponds to Bus125, ..., and entry 255 corresponds to Bus255.

For any Bus number, there may be a corresponding context table. For example, for Bus125, there may be a corresponding context table 125.

The context table may include a plurality of context entries (context entries). For any context entry, the context entry has a corresponding device number (Device, Dev) and function number (Function, Func). For example, context table 125 may include a plurality of context entries, where context entry 1 corresponds to a Dev number of 0 and a Func number of 1.

For any context entry, the context entry may store a base address of an L0 (level 0) page table in a corresponding 4-level page table. For example, the context entry 1 stores a base address of L0 page table 1 of 4-level page table 1.

The Bus number, the Dev number, and the Func number may form a BDF number, which is a unique identifier corresponding to a high-speed serial computer expansion bus standard (Peripheral Component Interconnect express, PCIe) device.

For any virtual machine in the source host machine, the virtual machine may have a plurality of corresponding PCIe devices. Each PCIe device may have a corresponding BDF number.

For example, if the virtual machine 1 corresponds to 2 PCIe devices, BDF number 1 of PCIe device 1 is 125:0:1, and BDF number 2 of PCIe device 2 is 0:30:7, then the base address of the 4-level page table 1 can be found in the root table and the context table based on the BDF number 1 and the BDF number 2. That is, the base address of the L0 page table 1 of the 4-level page table 1 can be determined in the context entry 1 of the context table 125 based on the BDF number 1; alternatively, the base address of the L0 page table 1 of the 4-level page table 1 can also be determined in context entry 2 of context table 0 (i.e., the context entry corresponding to Dev of 30 and Func number of 7) based on the BDF number 2. Thus, it can be determined that the 4-level page table 1 is the 4-level page table corresponding to the virtual machine 1.

For any 4-level page table, the 4-level page table may include one L0 page table, a plurality of L1 (level 1) page tables, a plurality of L2 (level 2) page tables, and a plurality of L3 (level 3) page tables. For example, the 4-level page table 1 may include 1 L0 page table, 29 L1 page tables, 218 L2 page tables, and 227 L3 page tables.

The L0 page table may include a plurality of entries, each entry storing an address of one L1 page table. For example, entry 1 of the L0 page table 1 may store an address of L1 page table 1.

Each L1 page table may include a plurality of entries, each entry storing an address of one L2 page table. For example, entry 1 of the L1 page table 1 may store an address of L2 page table 1.

Each L2 page table may include a plurality of entries, each entry storing an address of one L3 page table. For example, entry 1 of the L2 page table 1 may store an address of L3 page table 1.

Each L3 page table may include a plurality of entries, each entry storing a base address and a page flag of one memory page. For example, entry 1 of the L3 page table 1 may store base address 1 and a page flag of memory page 1.

When a migration operation is performed on the virtual machine 1, the source host machine may determine the root table and the context table based on a BDF number in a memory operation request, and determine, in the context table, the base address of the L0 page table 1 of the 4-level page table 1, thereby determining the 4-level page table 1 corresponding to the virtual machine 1.

The source host machine may determine, based on a virtual address of a target memory page in the memory operation request, a base address corresponding to the target memory page in the 4-level page table 1, and further determine a physical address of the target memory page based on the base address and the virtual address. The source host machine may perform an operation on the target memory page based on the physical address. For example, if the target memory page is the memory page 1, the base address 1 corresponding to the memory page 1 may be determined in the 4-level page table 1 based on virtual address 1 of the memory page 1, and physical address 1 of the memory page 1 may be determined based on the base address 1 and the virtual address 1. The source host machine may perform an operation on the memory page 1 based on the physical address 1.

If the memory operation request is a write request, after the operation is performed on the target memory page, the data of the target memory page is updated, and a page flag corresponding to the target memory page may be updated to a dirty flag in the L3 page table of the 4-level page table to indicate that the data of the target memory page has been updated. For example, after the operation is performed on the memory page 1, a page flag corresponding to the memory page 1 may be updated to a dirty flag in the L3 page table 1 of the 4-level page table 1 to indicate that the data of the memory page 1 has been updated.

Based on the above page marking method, during live migration of the virtual machine, when iterative migration is performed on the data of the memory pages whose page flags are dirty flags, all entries in all page tables of the 4-level page table corresponding to the virtual machine need to be traversed to determine the page flag of each memory page, so as to determine a plurality of target memory pages whose page flags are dirty flags, resulting in low migration efficiency of the data of the target memory pages.

To solve the above problems, the present disclosure provides an IOMMU-based page marking method.

The technical solutions shown in the present disclosure are described in detail below through specific embodiments. It should be noted that the following embodiments may exist independently or be combined with each other, and the same or similar content is not repeated in different embodiments.

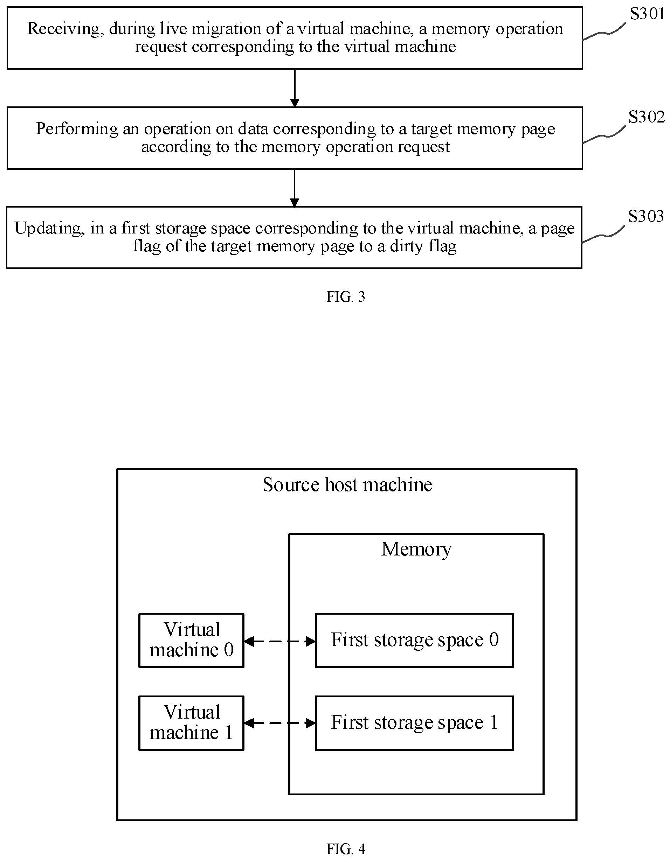

FIG. 3 is a schematic flowchart of a page marking method provided by an exemplary embodiment of the present disclosure. Referring to FIG. 3, the method may include the following steps.

S301, receiving, during live migration of a virtual machine, a memory operation request corresponding to the virtual machine.

An execution entity of the embodiment of the present disclosure may be a source host machine, or a page marking apparatus provided in the source host machine. The page marking apparatus may be implemented by software, or implemented by a combination of software and hardware. The page marking apparatus may be a processor in the source host machine. For ease of understanding, the following description uses the source host machine as an example of the execution entity.

At least one virtual machine may be run in the source host machine. The virtual machine may be live-migrated from the source host machine to a target host machine.

For any virtual machine, the memory of the source host machine may include a plurality of memory pages corresponding to the virtual machine.

The memory operation request may be used to request an operation on a target memory page.

For example, if virtual machine 1 is run in the source host machine, during live migration of the virtual machine 1, the source host machine may receive memory operation request 1 corresponding to the virtual machine 1. The memory operation request 1 may be "write data A into memory page 1," and the target memory page is the memory page 1, where the memory operation request 1 is used to request an operation on the memory page 1.

S302, performing an operation on data of the target memory page according to the memory operation request.

For example, if the memory operation request 1 may be "write data A into memory page 1," the data A may be written into the memory page 1 according to the memory operation request 1.

S303, updating, in a first storage space corresponding to the virtual machine, a page flag of the target memory page to a dirty flag.

The dirty flag may be used to indicate that the data of the target memory page has been updated.

Optionally, first storage spaces respectively corresponding to a plurality of virtual machines may be preset in the memory of the source host machine.

The first storage space in the memory is described below with reference to FIG. 4.

FIG. 4 is a schematic diagram of memory in a source host machine provided by an exemplary embodiment of the present disclosure. Referring to FIG. 4, if virtual machine 0 and virtual machine 1 are run in the source host machine, first storage space 0 corresponding to the virtual machine 0 and first storage space 1 corresponding to the virtual machine 1 may be preset in the memory of the source host machine.

The first storage space may include page flags corresponding to a plurality of memory pages.

Optionally, a page flag of "0" may be used to indicate that data of the memory page is not updated. The dirty flag may be represented by "1", and when the page flag is the dirty flag, that is, the page flag is "1," it may be used to indicate that the data of the memory page has been updated.

In an optional embodiment, the page flag corresponding to the target memory page may be updated to the dirty flag in the first storage space corresponding to the virtual machine in the following manner: determining a first storage address according to the memory operation request; determining the first storage space according to the first storage address; and updating the page flag of the target memory page to the dirty flag in the first storage space.

The first storage address may refer to a start address of the first storage space.

For example, if the virtual machine 1 corresponds to the first storage space 1, after receiving the memory operation request 1, the source host machine may determine first storage address 1 according to the memory operation request 1, and determine the first storage space 1 according to the first storage address 1, and further update the page flag of the memory page 1 to the dirty flag in the first storage space 1.

In the embodiment of the present disclosure, during live migration of the virtual machine, the source host machine may receive the memory operation request corresponding to the virtual machine, perform the operation on the data of the target memory page according to the memory operation request, and further update the page flag of the target memory page to the dirty flag in the first storage space corresponding to the virtual machine. Because the page flag of the target memory page can be updated to the dirty flag in the first storage space corresponding to the virtual machine, during the process of migrating the virtual machine from the source host machine to the target host machine, when iterative migration is performed, the page flags of the respective memory pages can be obtained in the first storage space to determine a plurality of target memory pages that need to be migrated, without the need to traverse all entries in the record tables corresponding to the virtual machine, thereby improving the migration efficiency of the data of the target memory pages.

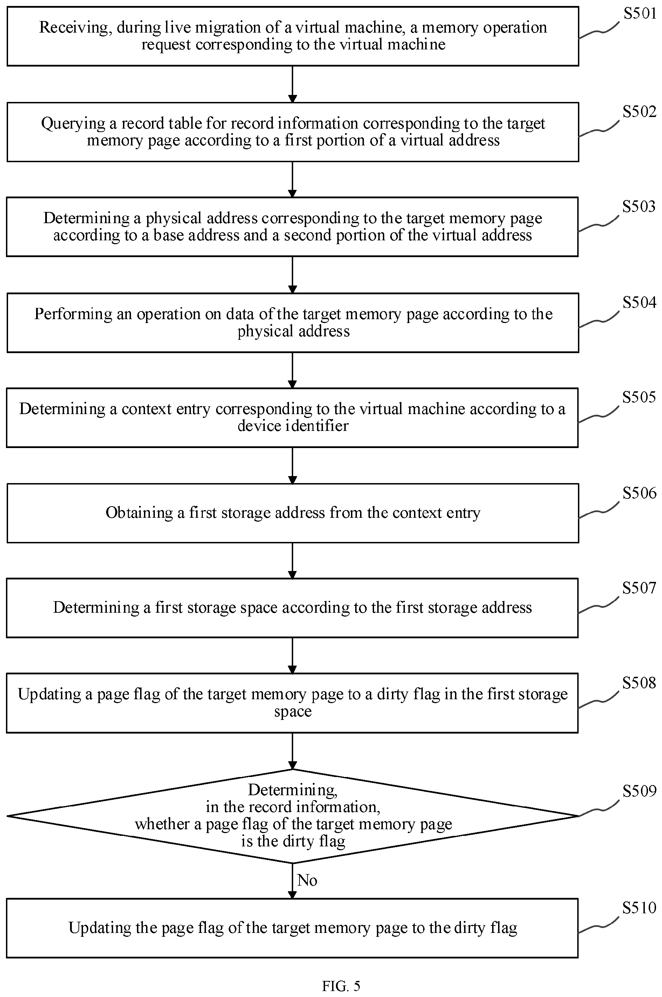

The page marking method is described in detail below with reference to FIG. 5, based on the embodiment shown in FIG. 3.

FIG. 5 is a schematic flowchart of another page marking method provided by an exemplary embodiment of the present disclosure. Referring to FIG. 5, the method may include the following steps.

S501, receiving, during live migration of a virtual machine, a memory operation request corresponding to the virtual machine.

For example, during live migration of virtual machine 1, a source host machine may receive memory operation request 1 corresponding to the virtual machine 1. The memory operation request 1 may be "write data A into memory page 1."

S502, querying a record table for record information corresponding to a target memory page according to a first portion of a virtual address.

Optionally, the memory operation request may include a virtual address of the target memory page, and the virtual address may include a first portion of the virtual address and a second portion of the virtual address. The second portion of the virtual address may be an address offset corresponding to the target memory page.

If the virtual address is a 48-bit address, then from right to left, the 0th bit to the 11th bit may represent the second portion of the virtual address, and the 12th bit to the 47th bit may represent the first portion of the virtual address. For example, if virtual address 1 is 0x0080x0120x0240x2820x1DE, then "0x1DE" may be the second portion of the virtual address, and "0x0080x0120x0240x282" may be the first portion of the virtual address.

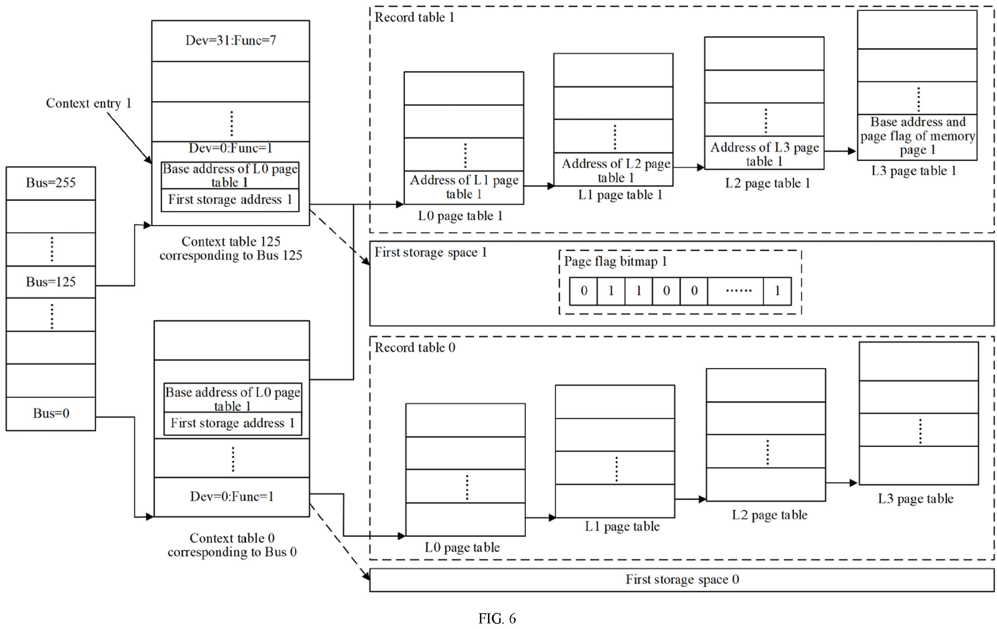

Optionally, the record table may be a multi-level page table. For example, the record table may be a 4-level page table, and the record table may include a plurality of page tables. As shown in FIG. 6, the record table may include one L0 page table, a plurality of L1 page tables, a plurality of L2 page tables, and a plurality of L3 page tables.

The record table may include the record information corresponding to the target memory page. The record information includes a base address of the target memory page.

Optionally, the source host machine may determine, in a context entry corresponding to the virtual machine, a base address of the L0 page table in the record table, so as to determine the record table corresponding to the virtual machine. The record table may include a plurality of page tables, and the record information corresponding to the target memory page may be obtained by querying the plurality of page tables.

Specifically, the record information corresponding to the target memory page may be obtained by querying the plurality of page tables, which includes the following 5 steps.

Step 1: Since the base address of the L0 page table in the record table may be determined from the context entry, the source host machine may determine the L0 page table based on the base address of the L0 page table in the record table.

Step 2: The L0 page table may include a plurality of entries, each entry storing an address of one L1 page table. Indexing may be performed in the L0 page table according to the 39th bit to the 47th bit in the first portion of the virtual address to determine an address of a corresponding L1 page table, and then the L1 page table may be determined based on the address of the L1 page table. For example, if record table 1 corresponding to the virtual machine 1 is as shown in FIG. 6, and if the first portion of the virtual address is "0x0080x0120x0240x282", where the 39th bit to the 47th bit are "0x008", then the address of the corresponding L1 page table may be determined in the L0 page table 1 based on "0x008". It is assumed that the address of L1 page table 1 may be determined in the L0 page table 1 based on "0x008", and then the L1 page table 1 may be determined based on the address of the L1 page table 1.

Step 3: The L1 page table may include a plurality of entries, each entry storing an address of one L2 page table. Indexing may be performed in the corresponding L1 page table according to the 30th bit to the 38th bit in the first portion of the virtual address to determine an address of a corresponding L2 page table, and then the L2 page table may be determined based on the address of the L2 page table. For example, if the record table 1 corresponding to the virtual machine 1 is as shown in FIG. 6, and if the 30th bit to the 38th bit in the first portion of the virtual address are "0x012", then the address of the corresponding L2 page table 1 may be determined in the L1 page table 1 based on "0x012". It is assumed that the address of the L2 page table 1 may be determined in the L1 page table 1 based on "0x012", and then the L2 page table 1 may be determined based on the address of the L2 page table 1.

Step 4: The L2 page table may include a plurality of entries, each entry storing an address of one L3 page table. Indexing may be performed in the corresponding L2 page table according to the 21st bit to the 29th bit in the first portion of the virtual address to determine an address of a corresponding L3 page table, and then the L3 page table may be determined based on the address of the L3 page table. For example, if the record table 1 corresponding to the virtual machine 1 is as shown in FIG. 6, and if the 21st bit to the 29th bit in the first portion of the virtual address are "0x024", then the address of the corresponding L3 page table 1 may be determined in the L2 page table 1 based on "0x024". It is assumed that the address of the L3 page table 1 may be determined in the L2 page table 1 based on "0x024", and then the L3 page table 1 may be determined based on the address of the L3 page table 1.

Step 5: The L3 page table may include a plurality of entries, each entry storing record information corresponding to one memory page. Indexing may be performed in the corresponding L3 page table according to the 12th bit to the 20th bit in the first portion of the virtual address to determine the record information corresponding to the target memory page. For example, if the target memory page is memory page 1, and if the 12th bit to the 20th bit in the first portion of the virtual address are "0x282", then record information 1 corresponding to the memory page 1 may be obtained by querying L3 page table 1 based on "0x282". The record information 1 may include base address 1 of the memory page 1, as shown in FIG. 6.

S503, determining a physical address corresponding to the target memory page based on the base address and the second portion of the virtual address.

Optionally, the base address may be a 36-bit address, and the second portion of the virtual address has 12 bits. Therefore, the base address and the second portion of the virtual address may be combined to obtain a 48-bit physical address, that is, the physical address corresponding to the target memory page.

For example, if the target memory page is the memory page 1, the base address 1 of the memory page 1 is obtained by querying the record table, and the second portion of the virtual address is "0x1DE", then physical address 1 corresponding to the memory page 1 may be determined based on the base address 1 and the second portion of the virtual address 0x1DE.

S504, performing an operation on data of the target memory page based on the physical address.

For example, for example, if the memory operation request 1 may be "write data A into memory page 1", and if the physical address of the memory page 1 is the physical address 1, then the memory page 1 may be determined based on the physical address 1, and data A may be written into the memory page 1 according to the memory operation request 1.

S505, determining a context entry corresponding to the virtual machine according to a device identifier.

Optionally, the memory operation request may include the device identifier. The device identifier may be a BDF number, and the device identifier includes a Bus number, a Dev number, and a Func number. For example, if the device identifier is 125:0:1, it indicates that the Bus number is 125, the Dev number is 0, and the Func number is 1.

The context entry corresponding to the virtual machine is described below with reference to FIG. 6.

FIG. 6 is a schematic structural diagram of a page marking method provided by an exemplary embodiment of the present disclosure. Referring to FIG. 6, the host machine may include one root table, a plurality of context tables, and a plurality of record tables. The source host machine may index to the root table and a context table based on the device identifier, and determine, in the context table, the context entry corresponding to the virtual machine.

For example, if the device identifier in the memory operation request is 125:0:1, then context table 125 corresponding to the Bus number of 125 may be determined based on the device identifier, and context entry 1 corresponding to the Dev number of 0 and the Func number of 1 may be determined in the context table 125. Then the context entry 1 is the context entry corresponding to the virtual machine 1.

S506, obtaining a first storage address from the context entry.

The context entry may store the base address of the L0 page table of the 4-level page table corresponding to the virtual machine, and the first storage address of the first storage space. The first storage address is pre-stored in the context entry.

For example, if it is determined that the virtual machine 1 corresponds to the context entry 1, and if, as shown in FIG. 6, the context entry 1 stores the base address of the L0 page table 1 and first storage address 1, then the first storage address 1 may be obtained from the context entry.

S507, determining the first storage space according to the first storage address.

For example, as shown in FIG. 6, the source host machine may determine first storage space 1 based on the first storage address 1.

S508, updating a page flag of the target memory page to a dirty flag in the first storage space.

The first storage space may store a page flag bitmap corresponding to the virtual machine. The page flag bitmap may include page flags corresponding to a plurality of memory pages corresponding to the virtual machine.

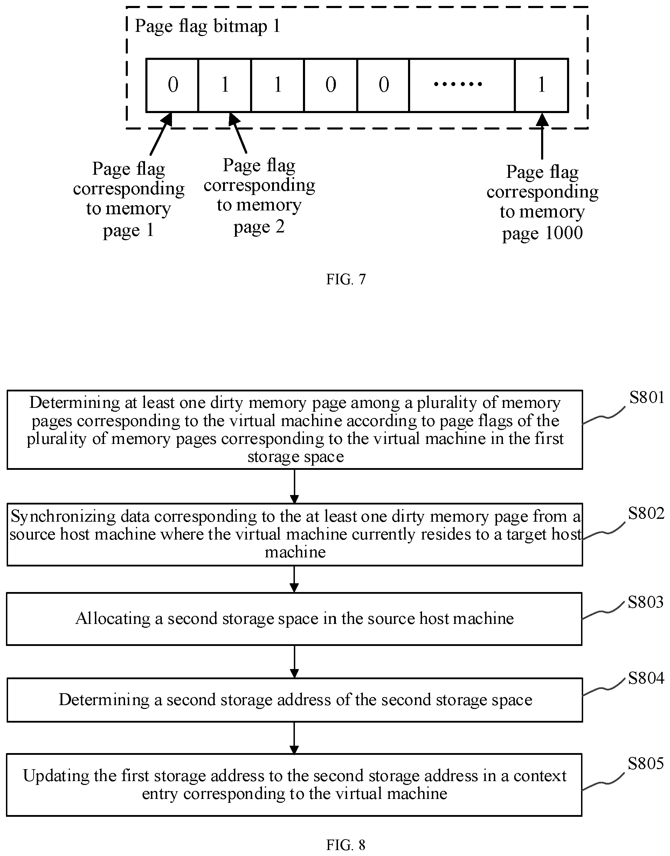

The page flag bitmap is described below with reference to FIG. 7.

FIG. 7 is a schematic diagram of a page flag bitmap provided by an exemplary embodiment of the present disclosure. Referring to FIG. 7, if the virtual machine 1 corresponds to 1000 memory pages, which are respectively memory page 1, memory page 2, ..., memory page 1000, then page flag bitmap 1 may be "01100...1". Herein, the 1st bit may be used to represent the page flag corresponding to the memory page 1, the 2nd bit may be used to represent the page flag corresponding to the memory page 2, ..., and the 1000th bit may be used to represent the page flag corresponding to the memory page 1000.

In an optional embodiment, the page flag of the target memory page may be updated to the dirty flag in the first storage space in the following manner: determining the current page flag corresponding to the target memory page in the page flag bitmap in the first storage space; if the current page flag is different from the dirty flag, updating the current page flag to the dirty flag.

For example, as shown in FIG. 6, if the first storage space 1 stores the page flag bitmap 1 as shown in FIG. 7, and if the target memory page is the memory page 1, then the current page flag 1 corresponding to the memory page 1 may be determined in the page flag bitmap 1. If the current page flag 1 is "0", and the dirty flag is represented by "1", then the current page flag corresponding to the memory page 1 may be updated to the dirty flag, that is, "0" is updated to "1".

S509, determining, in the record information, whether the page flag of the target memory page is the dirty flag.

Optionally, the record information may further include the page flag of the target memory page.

For example, if the target memory page is the memory page 1, and the page flag included in the record information 1 corresponding to the memory page 1 is 0, then the source host machine may determine whether the page flag is the dirty flag. If not, step S510 may be performed.

S510, updating the page flag of the target memory page to the dirty flag.

For example, if the page flag included in the record information 1 corresponding to the memory page 1 is 0, then the page flag of the target memory page may be updated to the dirty flag, that is, "0" is updated to "1".

Optionally, updating the page flag in the record information corresponding to the target memory page to the dirty flag is for the following purpose: in a subsequent migration process, after obtaining the page flag corresponding to the target memory page from the first storage space, the source host machine may compare it with the page flag in the record information, and if they are consistent and are the dirty flag, the source host machine may migrate the data of the target memory page. The page flag in the record information may serve as a redundancy identifier.

In the embodiments of the present disclosure, during live migration of the virtual machine, the source host machine may receive the memory operation request corresponding to the virtual machine, query the record table for the record information corresponding to the target memory page based on the first portion of the virtual address, and determine the physical address corresponding to the target memory page based on the base address and the second portion of the virtual address, so as to perform the operation on the data of the target memory page based on the physical address. The source host machine may determine the context entry corresponding to the virtual machine based on the device identifier, obtain the first storage address from the context entry, and determine the first storage space based on the first storage address, so as to update the page flag of the target memory page to the dirty flag in the first storage space. The source host machine may determine, in the record information, whether the page flag of the target memory page is the dirty flag, and update the page flag of the target memory page to the dirty flag. Since the page flag of the target memory page can be updated to the dirty flag in the first storage space corresponding to the virtual machine, during the process of migrating the virtual machine from the source host machine to the target host machine, when iterative migration is performed, the page flags of the respective memory pages can be obtained from the first storage space to determine a plurality of target memory pages that need to be migrated, without the need to traverse all entries in the record tables corresponding to the virtual machine, thereby improving the migration efficiency of the data of the target memory pages.

It should be noted that, based on the page marking method shown in FIG. 2 or FIG. 5, during live migration of the virtual machine, when iterative migration is performed on a plurality of memory pages corresponding to the virtual machine, the efficiency of determining dirty memory pages can be improved, thereby improving the efficiency of migrating data of the dirty memory pages, thus reducing the downtime (downtime) caused by live migration on the virtual machine and improving the efficiency of live migration of the virtual machine.

The process of iterative migration of a plurality of memory pages corresponding to the virtual machine is described below with reference to FIG. 8.

FIG. 8 is a schematic flowchart of iterative migration of a plurality of memory pages corresponding to a virtual machine provided by an exemplary embodiment of the present disclosure. Referring to FIG. 8, the method may include the following steps.

S801, determining at least one dirty memory page among a plurality of memory pages corresponding to the virtual machine according to page flags of the plurality of memory pages corresponding to the virtual machine in the first storage space.

In an optional embodiment, determining at least one dirty memory page among the plurality of memory pages corresponding to the virtual machine according to the page flags of the plurality of memory pages corresponding to the virtual machine in the first storage space: determining at least one target page flag in a page flag bitmap, where a value of the target page flag is a value corresponding to the dirty flag; and determining a memory page corresponding to the at least one target page flag as the at least one dirty memory page.

As shown in FIG. 6, the source host machine may determine a device identifier, and determine a context entry corresponding to the virtual machine based on the device identifier. The context entry may include a first storage address. The source host machine may determine the first storage address from the context entry corresponding to the virtual machine, and determine the first storage space based on the first storage address. The first storage space may store the page flag bitmap corresponding to the virtual machine. The page flag bitmap may include page flags corresponding to a plurality of memory pages.

For example, if virtual machine 1 corresponds to 1000 memory pages, and if page flag bitmap 1 includes the page flags corresponding to the 1000 memory pages, and it is assumed that 400 target page flags (that is, the page flags that are "1",) may be determined in the page flag bitmap, then the memory pages respectively corresponding to the 400 target page flags may be determined as dirty memory pages, and thus 400 dirty memory pages may be determined.

S802, synchronizing data of the at least one dirty memory page from the source host machine where the virtual machine currently resides to a target host machine.

The target host machine is the host machine to which the virtual machine is to be migrated.

For example, if it is determined that there are 400 dirty memory pages, then the data of the 400 dirty memory pages may be respectively synchronized from the source host machine to the target host machine.

Optionally, after synchronizing the data of the at least one dirty memory page from the source host machine where the virtual machine currently resides to the target host machine, the page flags corresponding to the respective memory pages in the page flag bitmap in the first storage space may be reset to "0".

S803, allocating a second storage space in the source host machine.

Optionally, during the process of iterative migration of the plurality of memory pages corresponding to the virtual machine, the i-th migration may be performed based on the page flag bitmap in the first storage space (where i is an integer greater than or equal to 1). Since the virtual machine is still running during the ith migration, new dirty memory pages may be generated. Therefore, the second storage space may be allocated in the source host machine, and the second storage space may be used to store the page flag bitmap used for the (i+1)th migration, so that the (i+1)th migration is performed based on the page flag bitmap in the second storage space.

S804, determining a second storage address of the second storage space.

S805, updating the first storage address to the second storage address in a context entry corresponding to the virtual machine.

Optionally, if the virtual machine corresponds to a plurality of context entries, then the first storage address in each of the plurality of context entries may be updated to the second storage address.

For example, if context entry 1 corresponding to the virtual machine 1 stores first storage address 1 corresponding to the first storage space, then the first storage address 1 may be updated to the second storage address. If the virtual machine 1 further corresponds to a context entry in context table 0 where Dev is 30 and Func number is 7, then the first storage address 1 in that context entry may also be updated to the second storage address.

Since the page flag bitmap used for the ith migration can be stored in the first storage space and the page flag bitmap used for the (i+1)th migration can be stored in the second storage space, confusion of page flag bitmaps during the migration process is avoided, thereby improving the accuracy of migrating data of the plurality of memory pages.

In the embodiments of the present disclosure, the source host machine may determine at least one dirty memory page among a plurality of memory pages corresponding to the virtual machine based on the page flags of the respective memory pages corresponding to the virtual machine in the first storage space, and synchronize the data of the at least one dirty memory page from the source host machine where the virtual machine currently resides to the target host machine. It is also possible to allocate the second storage space in the source host machine, determine the second storage address of the second storage space, and update the first storage address to the second storage address in the context entry corresponding to the virtual machine. Since during the process of migrating the virtual machine from the source host machine to the target host machine, when iterative migration is performed, the page flags of the respective memory pages can be obtained in the first storage space to determine a plurality of target memory pages that need to be migrated, there is no need to traverse all entries in the record tables corresponding to the virtual machine, and the migration efficiency of the data of the target memory pages is improved, thereby improving the efficiency of live migration of the virtual machine.

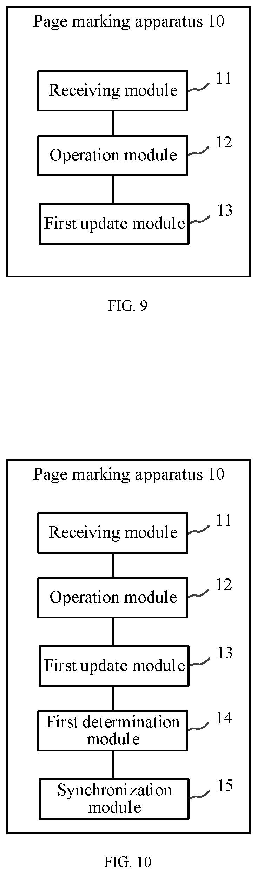

FIG. 9 is a schematic structural diagram of a page marking apparatus provided by an exemplary embodiment of the present disclosure. Referring to FIG. 9, the page marking apparatus 10 includes: a receiving module 11, an operation module 12, and a first update module 13, where:
the receiving module 11 is configured to receive, during live migration of a virtual machine, a memory operation request corresponding to the virtual machine, where the memory operation request is used to request an operation on a target memory page;
the operation module 12 is configured to perform the operation on data of the target memory page according to the memory operation request;
the first update module 13 is configured to update, in a first storage space corresponding to the virtual machine, a page flag of the target memory page to a dirty flag, where the dirty flag is used to indicate that data of the target memory page is updated during the live migration of the virtual machine.

The page marking apparatus provided in this embodiment of the present disclosure is capable of executing the technical solutions shown in the foregoing method embodiments, and the implementation principles and beneficial effects thereof are similar, which will not be repeated herein.

In a possible implementation, the first update module 13 is specifically configured to:
determine a first storage address according to the memory operation request;
determine the first storage space according to the first storage address;
update the page flag of the target memory page to the dirty flag in the first storage space.

In a possible implementation, the memory operation request includes a device identifier, and the first update module 13 is specifically configured to:
determine a context entry corresponding to the virtual machine according to the device identifier;
obtain the first storage address from the context entry, where the first storage address is pre-stored in the context entry.

In a possible implementation, a page flag bitmap corresponding to the virtual machine is stored in the first storage space, and the first update module 13 is specifically configured to:
determine a current page flag corresponding to the target memory page in the page flag bitmap in the first storage space;
if the current page flag is different from the dirty flag, update the current page flag to the dirty flag.

In a possible implementation, the memory operation request includes a virtual address of the target memory page, and the virtual address includes a first portion of the virtual address and a second portion of the virtual address; and the operation module 12 is specifically configured to:
query a record table for record information corresponding to the target memory page according to the first portion of the virtual address, where the record information includes a base address of the target memory page;
determine a physical address corresponding to the target memory page according to the base address and the second portion virtual address;
perform the operation on the data of the target memory page according to the physical address.

In a possible implementation, the record information further includes a page flag of the target memory page, and the first update module 13 is further configured to:
determine, in the record information, whether the page flag of the target memory page is the dirty flag;
if not, update the page flag of the target memory page to the dirty flag.

The page marking apparatus provided in this embodiment of the present disclosure is capable of executing the technical solutions shown in the foregoing method embodiments, and the implementation principles and beneficial effects thereof are similar, which will not be repeated herein.

FIG. 10 is a schematic structural diagram of another page marking apparatus provided by an exemplary embodiment of the present disclosure. Referring to FIG. 10, on the basis of the embodiment shown in FIG. 9, the page marking apparatus 10 further includes: a first determination module 14 and a synchronization module 15, where:
the first determination module 14 is configured to determine at least one dirty memory page among a plurality of memory pages corresponding to the virtual machine according to page flags of the plurality of memory pages corresponding to the virtual machine in the first storage space;
the synchronization module 15 is configured to synchronize data of the at least one dirty memory page from the source host machine where the virtual machine currently resides to a target host machine, where the target host machine is a host machine to which the virtual machine is to be migrated.

The page marking apparatus provided in this embodiment of the present disclosure is capable of executing the technical solutions shown in the foregoing method embodiments, and the implementation principles and beneficial effects thereof are similar, which will not be repeated herein.

In a possible implementation, a page flag bitmap corresponding to the virtual machine is stored in the first storage space, and the first determination module 14 is specifically configured to:
determine at least one target page flag in the page flag bitmap, where a value of the target page flag is a value corresponding to the dirty flag;
determine a memory page corresponding to the at least one target page flag as the at least one dirty memory page.

The page marking apparatus provided in this embodiment of the present disclosure is capable of executing the technical solutions shown in the foregoing method embodiments, and the implementation principles and beneficial effects thereof are similar, which will not be repeated herein.

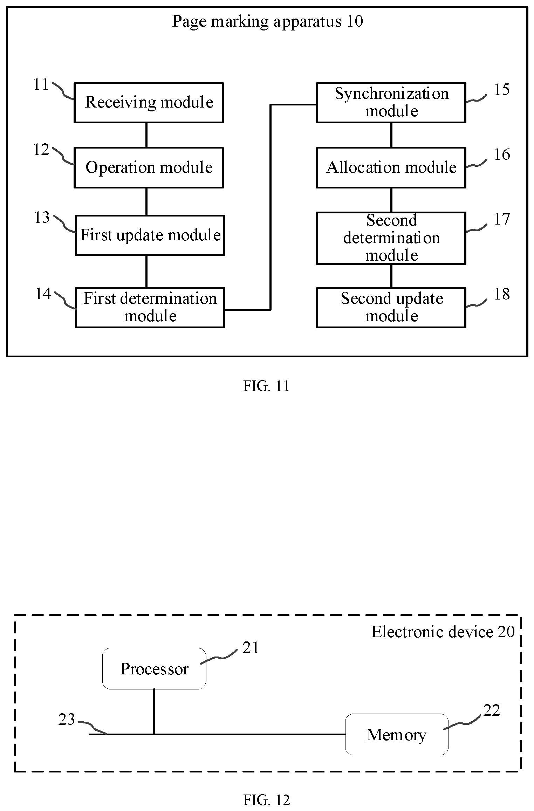

FIG. 11 is a schematic structural diagram of yet another page marking apparatus provided by an exemplary embodiment of the present disclosure. Referring to FIG. 11, on the basis of the embodiment shown in FIG. 10, the page marking apparatus 10 further includes: an allocation module 16, a second determination module 17, and a second update module 18, where:
the allocation module 16 is configured to allocate a second storage space in the source host machine;
the second determination module 17 is configured to determine a second storage address of the second storage space;
the second update module 18 is configured to update the first storage address to the second storage address in a context entry corresponding to the virtual machine.

The page marking apparatus provided in this embodiment of the present disclosure is capable of executing the technical solutions shown in the foregoing method embodiments, and the implementation principles and beneficial effects thereof are similar, which will not be repeated herein.

FIG. 12 is a schematic structural diagram of an electronic device provided by an exemplary embodiment of the present disclosure. Referring to FIG. 12, the electronic device 20 may include a processor 21 and a memory 22. Exemplarily, the processor 21, the memory 22 and other parts are interconnected with each other via a bus 23.

The memory 22 stores computer-executable instructions;
the processor 21 executes the computer-executable instructions stored in the memory 22, such that the processor 21 performs the method shown in the foregoing method embodiments.

The electronic device shown in FIG. 12 may be the source host machine described in any one of the foregoing embodiments.

Correspondingly, an embodiment of the present disclosure provides a computer-readable storage medium, where the computer-readable storage medium stores computer-executable instructions, and when the computer-executable instructions are executed by a processor, the method described in the foregoing method embodiments is implemented.

Correspondingly, an embodiment of the present disclosure further provides a computer program product, including a computer program, and when the computer program is executed by a processor, the method shown in the foregoing method embodiments may be implemented.

Those skilled in the art should understand that the embodiments of the present disclosure may be provided as a method, a system, or a computer program product. Accordingly, the present disclosure may take the form of an entirely hardware embodiment, an entirely software embodiment, or an embodiment combining software and hardware aspects. Furthermore, the present disclosure may take the form of a computer program product embodied on one or more computer-usable storage media (including but not limited to disk storage, CD-ROM, optical storage, and the like) containing computer-usable program code.

The present disclosure is described with reference to flowcharts and/or block diagrams of methods, apparatus (systems), and computer program products according to embodiments of the present disclosure. It should be understood that each flow and/or block in the flowcharts and/or block diagrams, and combinations of flows and/or blocks in the flowcharts and/or block diagrams, can be implemented by computer program instructions. These computer program instructions may be provided to a processor of a general-purpose computer, a special-purpose computer, an embedded processor, or other programmable data processing equipment to produce a machine, such that the instructions executed by the processor of the computer or other programmable data processing equipment create means for implementing the functions specified in one or more flows of the flowcharts and/or one or more blocks of the block diagrams.

These computer program instructions may also be stored in a computer-readable memory that can direct a computer or other programmable data processing equipment to function in a particular manner, such that the instructions stored in the computer-readable memory produce an article of manufacture including instruction means for implementing the functions specified in one or more flows of the flowcharts and/or one or more blocks of the block diagrams.

These computer program instructions may also be loaded onto a computer or other programmable data processing equipment to cause a series of operational steps to be performed on the computer or other programmable equipment to produce computer-implemented processing, such that the instructions executed on the computer or other programmable equipment provide steps for implementing the functions specified in one or more flows of the flowcharts and/or one or more blocks of the block diagrams.

In a typical configuration, a computing device includes one or more processors (CPUs), input/output interfaces, network interfaces, and memory.

The memory may include non-permanent storage in computer-readable media, a random access memory (RAM), and/or non-volatile memory, such as read-only memory (ROM) or flash memory (flash RAM). The memory is an example of a computer-readable medium.

Computer-readable media include permanent and non-permanent, removable and non-removable media, and information storage may be implemented by any method or technology. The information may be computer-readable instructions, data structures, modules of a program, or other data. Examples of computer storage media include, but are not limited to, phase-change memory (PRAM), static random access memory (SRAM), dynamic random access memory (DRAM), other types of random access memory (RAM), read-only memory (ROM), electrically erasable programmable read-only memory (EEPROM), flash memory or other memory technologies, compact disc read-only memory (CD-ROM), digital versatile disc (DVD) or other optical storage, magnetic cassettes, magnetic tape, magnetic disk storage or other magnetic storage devices, or any other non-transmission medium, which can be used to store information that can be accessed by a computing device. As defined herein, computer-readable media do not include transitory computer-readable media (transitory media), such as modulated data signals and carrier waves.

It should be noted that the terms "comprise," "include," or any other variations thereof are intended to cover non-exclusive inclusion, such that a process, method, article, or apparatus that includes a series of elements includes not only those elements but also other elements not explicitly listed, or also includes elements inherent to such process, method, article, or apparatus. Without further limitation, an element defined by the phrase "including a/an/one ..." does not exclude the presence of additional identical elements in the process, method, article, or apparatus that includes the element.

The foregoing descriptions are merely embodiments of the present disclosure and are not intended to limit the present disclosure. For those skilled in the art, the present disclosure may have various modifications and variations. Any modification, equivalent replacement, improvement, and the like made within the spirit and principles of the present disclosure should be included within the scope of the claims of the present disclosure.

## Claims

1. A page marking method, comprising:
receiving, during live migration of a virtual machine, a memory operation request corresponding to the virtual machine, wherein the memory operation request is used to request an operation on a target memory page;
performing the operation on data of the target memory page according to the memory operation request; and
updating, in a first storage space corresponding to the virtual machine, a page flag of the target memory page to a dirty flag, wherein the dirty flag is used to indicate that the data of the target memory page is updated.

2. The method of claim 1, wherein updating, in the first storage space corresponding to the virtual machine, the page flag of the target memory page to the dirty flag comprises:
determining a first storage address according to the memory operation request;
determining the first storage space according to the first storage address; and
updating the page flag of the target memory page to the dirty flag in the first storage space.

3. The method of claim 2, wherein the memory operation request comprises a device identifier, and wherein determining the first storage address according to the memory operation request comprises:
determining a context entry corresponding to the virtual machine according to the device identifier; and
obtaining the first storage address from the context entry, wherein the first storage address is pre-stored in the context entry.

4. The method of claim 2 or 3, wherein a page flag bitmap corresponding to the virtual machine is stored in the first storage space, and wherein updating the page flag of the target memory page to the dirty flag in the first storage space comprises:
determining a current page flag corresponding to the target memory page in the page flag bitmap in the first storage space; and
in response to the current page flag being different from the dirty flag, updating the current page flag to the dirty flag.

5. The method of any one of claims 1-4, wherein the memory operation request comprises a virtual address of the target memory page, the virtual address comprising a first portion of the virtual address and a second portion of the virtual address, and wherein performing the operation on the data of the target memory page according to the memory operation request comprises:
querying a record table for record information corresponding to the target memory page according to the first portion of the virtual address, wherein the record information comprises a base address of the target memory page;
determining a physical address corresponding to the target memory page according to the base address and the second portion of the virtual address; and
performing the operation on the data of the target memory page according to the physical address.

6. The method of claim 5, wherein the record information further comprises a page flag of the target memory page, and wherein the method further comprises:
determining, in the record information, whether the page flag of the target memory page is the dirty flag; and
in response to the page flag of the target memory page not being the dirty flag, updating the page flag of the target memory page to the dirty flag.

7. The method of any one of claims 1-6, further comprising:
determining at least one dirty memory page among a plurality of memory pages corresponding to the virtual machine according to page flags of the plurality of memory pages corresponding to the virtual machine in the first storage space; and
synchronizing data of the at least one dirty memory page from a source host machine where the virtual machine currently resides to a target host machine, wherein the target host machine is a host machine to which the virtual machine is to be migrated.

8. The method of claim 7, wherein a page flag bitmap corresponding to the virtual machine is stored in the first storage space, and wherein determining the at least one dirty memory page among the plurality of memory pages corresponding to the virtual machine according to the page flags of the plurality of memory pages corresponding to the virtual machine in the first storage space comprises:
determining at least one target page flag in the page flag bitmap, wherein a value of each of the at least one target page flag is a value corresponding to the dirty flag; and
determining a memory page corresponding to the at least one target page flag as the at least one dirty memory page.

9. The method of claim 7 or 8, further comprising:
allocating a second storage space in the source host machine;
determining a second storage address of the second storage space; and
updating the first storage address to the second storage address in a context entry corresponding to the virtual machine.

10. A page marking apparatus, comprising: a receiving module, an operation module, and a first update module, wherein:
the receiving module is configured to receive, during live migration of a virtual machine, a memory operation request corresponding to the virtual machine, wherein the memory operation request is used to request an operation on a target memory page;
the operation module is configured to perform the operation on data of the target memory page according to the memory operation request; and
the first update module is configured to update, in a first storage space corresponding to the virtual machine, a page flag of the target memory page to a dirty flag, wherein the dirty flag is used to indicate that the data of the target memory page is updated.

11. An electronic device, comprising:
at least one processor; and
a memory communicatively connected to the at least one processor;
wherein the memory stores instructions executable by the at least one processor, and the instructions, when executed by the at least one processor, cause the electronic device to perform the method according to any one of claims 1-9.

12. A computer-readable storage medium storing computer-executable instructions that, when executed by a processor, implement the method according to any one of claims 1-9.

13. A computer program product comprising a computer program that, when executed by a processor, implements the method according to any one of claims 1-9.
